(19) Europäisches Patentamt
European Patent Office
Office européen des brevets

(11) **EP 4 012 420 B1**

(12) **EUROPEAN PATENT SPECIFICATION**

(45) Date of publication and mention
of the grant of the patent:
**12.04.2023 Bulletin 2023/15**

(21) Application number: **21213272.4**

(22) Date of filing: **08.12.2021**

(51) International Patent Classification (IPC):
**G01P 5/00** (2006.01)        **G01P 13/02** (2006.01)

(52) Cooperative Patent Classification (CPC):
**G01P 5/00; G01P 13/025**

(54) **WIND ESTIMATION METHOD AND APPARATUS FOR CARRIER ROCKET, DEVICE AND STORAGE MEDIUM**

**WINDSCHÄTZVERFAHREN UND -EINRICHTUNG FÜR TRÄGERRAKETE, VORRICHTUNG UND SPEICHERMEDIUM**

**PROCÉDÉ D'ESTIMATION DU VENT ET APPAREIL POUR FUSÉE PORTEUSE, DISPOSITIF ET SUPPORT D'INFORMATIONS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2020 CN 202011419824**

(43) Date of publication of application:
**15.06.2022 Bulletin 2022/24**

(73) Proprietors:
• **Beijing Interstellar Glory Space Technology Co., Ltd.**
  **Beijing 100032 (CN)**
• **Beijing Interstellar Glory Technology LLC**
  **Beijing 100176 (CN)**

(72) Inventors:
• **PENG, Xiaobo**
  **Beijing, 100032 (CN)**
• **YAN, Qing**
  **Beijing, 100032 (CN)**
• **DU, Yanru**
  **Beijing, 100032 (CN)**

(74) Representative: **Schulz Junghans Patentanwälte PartGmbB**
**Großbeerenstraße 71**
**10963 Berlin (DE)**

(56) References cited:
**CN-B- 111 122 899     JP-A- 2013 107 584**
**US-B2- 6 807 468**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field**

The present invention relates to the technical field of carrier rockets, and in particular, to a wind estimation method and apparatus for a carrier rocket, a device and a storage medium.

**Background**

While flying in the atmospheric layer, a carrier rocket is continuously subjected to wind interference that changes over time, which will lead to increased errors of an attitude control system. The pressure of the attitude control system can be effectively reduced by adopting a wind interference compensation measure, which is based on fast real-time estimation of wind speed information. Methods of acquiring wind interference information for a carrier rocket rely extensively on measurement devices, i.e., airflow measurement device data is used to estimate the wind interference information. However, for a carrier rocket that is not equipped with an airflow measurement device, the wind speed information cannot be estimated quickly in real time.

Prior art is disclosed in documents US6807468B2, CN111122899B and JP2013107584A.

**Summary**

In view of this, embodiments of the present invention provide a wind estimation method and apparatus for a carrier rocket, a device and a storage medium to solve the problem that a carrier rocket without an airflow measurement device cannot perform rapid real-time estimation of wind speed information.

According to a first aspect, an embodiment of the present invention provides a wind estimation method for a carrier rocket, including:

acquiring a wind speed vector predicted value;

acquiring rocket body state parameters, and inputting the rocket body state parameters and the wind speed vector predicted value into a preset apparent acceleration prediction model to obtain a rocket body apparent acceleration predicted value, wherein the rocket body state parameters include a rocket body measured value, a rocket body estimated mass and an attitude control instruction;

acquiring a rocket body apparent acceleration measured value, and calculating an error between the rocket body apparent acceleration predicted value and the rocket body apparent acceleration measured value;

calculating an updated wind speed vector predicted value by using a preset transfer matrix and the error between the rocket body apparent acceleration predicted value and the rocket body apparent acceleration measured value;

determining whether the updated wind speed vector predicted value converges to a preset range; and

when the updated wind speed vector predicted value converges to a preset range, using the updated wind speed vector predicted value as a final wind speed vector predicted value; or when the updated wind speed vector predicted value does not converge to the preset range, using the updated wind speed vector predicted value as the next wind speed vector predicted value and returning to the step of acquiring a wind speed vector predicted value.

In the wind estimation method for a carrier rocket in the embodiment of the present invention, first, a rocket body apparent acceleration predicted value is determined based on a wind speed vector predicted value, an error between the rocket body apparent acceleration predicted value and a rocket body apparent acceleration measured value is calculated, the wind speed vector predicted value is updated by using the error and a transfer matrix, and a wind speed vector estimated value is obtained after several iterations. The method does not rely on airflow measurement data, but quickly estimates the wind speed vector.

In conjunction with the first aspect, in a first implementation of the first aspect, the rocket body measured value includes a rocket body height, a speed vector, and a rocket body attitude angle.

In conjunction with the first aspect, in a second implementation of the first aspect, the transfer matrix is obtained by the following method:

acquiring the rocket body apparent acceleration predicted value and the wind speed vector predicted value, respectively; and

calculating a ratio of a derivative of the rocket body apparent acceleration predicted value to a derivative of the wind speed vector predicted value to obtain the transition matrix.

In conjunction with the first aspect, in a third implementation of the first aspect, the apparent acceleration prediction model is built by a method including:

acquiring an angle of attack, an angle of sideslip and a Mach number, respectively, and fitting an aerodynamic coefficient as a function related to the Mach number, the angle of attack and the angle of sideslip;
acquiring a rocket body characteristic area and a dynamic pressure, respectively, and calculating an aerodynamic force by using the aerodynamic coefficient, the dynamic pressure and the rocket body characteristic area;
acquiring a static pressure, the attitude control instruction and a thrust adjustment coefficient, respectively, and calculating an engine thrust according to the static pressure, the attitude control instruction and the thrust adjustment coefficient;
calculating the rocket body estimated mass by using the thrust adjustment coefficient; and
obtaining the rocket body apparent acceleration prediction model according to the rocket body estimated mass, the aerodynamic force and the engine thrust.

In conjunction with the third implementation of the first aspect, in a fourth implementation of the first aspect, the angle of attack and the angle of sideslip are determined by a method including:

acquiring the wind speed vector predicted value, a rocket body speed vector and an attitude angle; and
calculating the angle of attack and the angle of sideslip according to the wind speed vector predicted value, the rocket body speed vector and the attitude angle.

In conjunction with the third implementation of the first aspect, in a fifth implementation of the first aspect, the dynamic pressure is determined by a method including:
acquiring an atmospheric density, and calculating the dynamic pressure by using the atmospheric density.

In conjunction with the first aspect, in a sixth implementation of the first aspect, before acquiring the wind speed vector predicted value, the method further includes:
initializing the wind speed vector predicted value to a zero vector.

According to a second aspect, an embodiment of the present invention provides a wind estimation apparatus for a carrier rocket, including:

a wind speed vector predicted value acquisition module configured to acquire a wind speed vector predicted value;
a rocket body apparent acceleration predicted value determination module configured to acquire rocket body state parameters, and input the rocket body state parameters and the wind speed vector predicted value into a preset apparent acceleration prediction model to obtain a rocket body apparent acceleration predicted value, wherein the rocket body state parameters include a rocket body measured value, a rocket body estimated mass and an attitude control instruction;
an error calculation module configured to acquire a rocket body apparent acceleration measured value, and calculate an error between the rocket body apparent acceleration predicted value and the rocket body apparent acceleration measured value;
a wind speed vector predicted value update module configured to calculate an updated wind speed vector predicted value by using a preset transfer matrix and the error between the rocket body apparent acceleration predicted value and the rocket body apparent acceleration measured value; and
an iteration module configured to determine whether the updated wind speed vector predicted value converges to a preset range; when the updated wind speed vector predicted value converges to the preset range, use the updated wind speed vector predicted value as a final wind speed vector predicted value; and when the updated wind speed vector predicted value does not converge to the preset range, use the updated wind speed vector predicted value as the next wind speed vector predicted value and return to the step of acquiring a wind speed vector predicted value.

According to a third aspect, an embodiment of the present invention provides an electronic device, including a memory and a processor, wherein the memory and the processor are communicatively connected to each other, and the memory stores computer instructions, which are executed by the processor to perform the wind estimation method for a carrier rocket in the first aspect or in any implementation of the first aspect.

According to a fourth aspect, an embodiment of the present invention provides a computer-readable storage medium, which stores computer instructions, wherein the computer instructions are configured to cause a computer to perform the wind estimation method for a carrier rocket in the first aspect or in any implementation of the first aspect.

**Brief Description of the Drawings**

Features and advantages of the present invention will be understood more clearly with reference to the accompanying drawings, which are illustrative and should not be construed as limiting the present invention. In the drawings:

Fig. 1 is a flow diagram of a wind estimation method for a carrier rocket in Embodiment 1 of the present invention;
Fig. 2 is a flow diagram of a wind estimation method for a carrier rocket in a specific example in Embodiment 1 of the present invention; and
Fig. 3 is an apparatus diagram of a wind estimation method for a carrier rocket in Embodiment 2 of the present invention.

**Detailed Description of the Embodiments**

To make the objects, technical solutions and advantages of the embodiments of the present invention clearer, the technical solutions in the embodiments of the present invention will be described below clearly and completely in conjunction with the accompanying drawings in the embodiments of the present invention. Obviously, the described embodiments are only a part of the embodiments of the present invention, and not all the embodiments. All other embodiments obtained by those skilled in the art based on the embodiments in the present invention without creative work fall into the protection scope of the present invention.

Embodiment 1

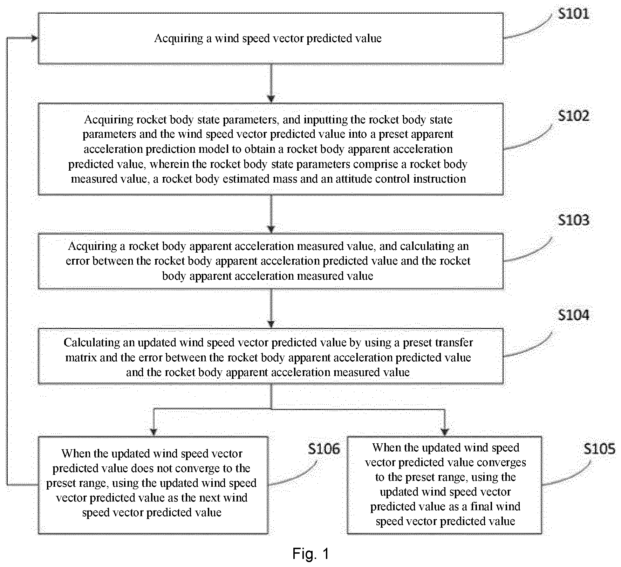

Embodiment 1 of the present invention provides a wind estimation method for a carrier rocket. Fig. 1 is a flow diagram of the wind estimation method for a carrier rocket in Embodiment 1 of the present invention. As shown in Fig. 1, the wind estimation method for a carrier rocket in Embodiment 1 of the present invention includes the following steps: S101: acquiring a wind speed vector predicted value.

In Embodiment 1 of the present invention, the wind speed vector predicted value is iteratively updated. As a specific implementation, before acquiring the first wind speed vector predicted value, the method further includes initializing the wind speed vector predicted value to a zero vector.

S102: acquiring rocket body state parameters, and inputting the rocket body state parameters and the wind speed vector predicted value into a preset apparent acceleration prediction model to obtain a rocket body apparent acceleration predicted value, wherein the rocket body state parameters include a rocket body measured value, a rocket body estimated mass and an attitude control instruction.

As a specific implementation, the rocket body measured value includes a rocket body height, a speed vector, and a rocket body attitude angle.

In embodiments of the present invention, the apparent acceleration prediction model is obtained by the following method:

(1021) acquiring an angle of attack, an angle of sideslip and a Mach number, respectively, and fitting an aerodynamic coefficient as a function related to the Mach number, the angle of attack and the angle of sideslip;
(1022) acquiring a rocket body characteristic area and a dynamic pressure, respectively, and calculating an aerodynamic force by using the aerodynamic coefficient, the dynamic pressure and the rocket body characteristic area;
(1023) acquiring a static pressure, the attitude control instruction and a thrust adjustment coefficient, respectively, and calculating an engine thrust according to the static pressure, the attitude control instruction and the thrust adjustment coefficient;
(1024) calculating the rocket body estimated mass by using the thrust adjustment coefficient; and
(1025) obtaining the rocket body apparent acceleration prediction model according to the rocket body estimated mass, the aerodynamic force and the engine thrust.

Specifically, in step (1021), the angle of attack and the angle of sideslip are determined by a method including: acquiring the wind speed vector predicted value, a rocket body speed vector and an attitude angle; and calculating the angle of attack and the angle of sideslip according to the wind speed vector predicted value, the rocket body speed vector and the attitude angle.

Specifically, in step (1022), the dynamic pressure is determined by a method including: acquiring an atmospheric density, and calculating the dynamic pressure by using the atmospheric density.

S103: acquiring a rocket body apparent acceleration measured value, and calculating an error between the rocket body apparent acceleration predicted value and the rocket body apparent acceleration measured value.

S104: calculating an updated wind speed vector predicted value by using a preset transfer matrix and the error between the rocket body apparent acceleration predicted value and the rocket body apparent acceleration measured value.

In Embodiment 1 of the present invention, the transfer matrix is obtained by the following method: acquiring the rocket body apparent acceleration predicted value and the wind speed vector predicted value, respectively; and calculating a ratio of a derivative of the rocket body apparent acceleration predicted value to a derivative of the wind speed vector predicted value to obtain the transition matrix.

S105: when the updated wind speed vector predicted value converges to a preset range, using the updated wind speed vector predicted value as a final wind speed vector predicted value.

S106: when the updated wind speed vector predicted value does not converge to the preset range, using the updated wind speed vector predicted value as the next wind speed vector predicted value and returning to the step of acquiring a wind speed vector predicted value.

As a specific implementation, the number of iterations may be used to determine whether the updated wind speed vector predicted value converges to the preset range. Generally, the updated wind speed vector predicted value may be considered to converge to the preset range when the number of iterations is greater than or equal to 10.

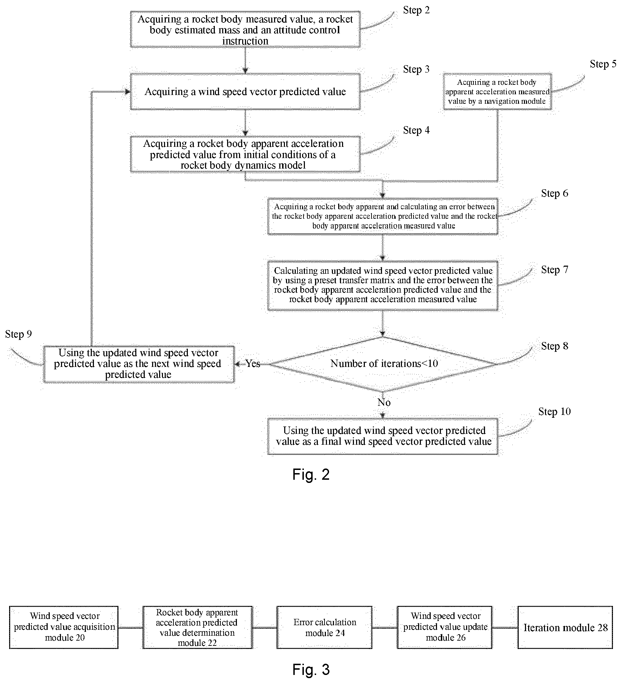

A specific example is provided to describe the wind estimation method for a carrier rocket in Embodiment 1 of the present invention in more detail. Fig. 2 is a flow diagram of a wind estimation method for a carrier rocket in a specific example in Embodiment 1 of the present invention. As shown in Fig. 2, the wind estimation method for a carrier rocket includes the following steps:

Step 1: using a swing engine as an attitude control actuator as an example, building an apparent acceleration prediction model. Specifically, step 1 may be implemented by the following method:

(a) calculating an angle of attack $\alpha$ and an angle of sideslip $\beta$ according to a wind speed vector predicted value

$$\vec{v}_w^s,$$

a rocket body speed vector and an attitude angle;

(b) calculating an atmospheric density $\rho$ and a static pressure $P$ according to a standard atmospheric model, and calculating a dynamic pressure value $q$ from the atmospheric density and the rocket body speed vector; and

(c) theoretically calculating aerodynamic data, and fitting an aerodynamic coefficient $C_x$ $C_y$ $C_z$ as a function related to a Mach number Ma, the angle of attack $\alpha$, and the angle of sideslip $\beta$, respectively. Thus, an aerodynamic force $F_x, F_y, F_z$ may be expressed as a function related to the aerodynamic coefficient, the dynamic pressure $q$, and a rocket body characteristic area $S$, as shown in the following formula.

$$\begin{cases} F_x = c_x(Ma, \alpha, \beta) \cdot q \cdot S \\ F_y = c_y(Ma, \alpha, \beta) \cdot q \cdot S \\ F_z = c_z(Ma, \alpha, \beta) \cdot q \cdot S \end{cases}$$

(d) based on engine thrust characteristics, expressing an engine thrust $\vec{T} = [T_x, T_y, T_z]^T$ as a function of the static pressure $P$, an attitude control instruction $\delta_x, \delta_y, \delta_z$ (i.e., an engine swing angle), and a thrust adjustment coefficient $K_p$, as shown in the following formula:

$$\begin{cases} T_x = f_4(P, \delta_x, \delta_y, \delta_z, K_p) \\ T_y = f_5(P, \delta_x, \delta_y, \delta_z, K_p) \\ T_z = f_6(P, \delta_x, \delta_y, \delta_z, K_p) \end{cases}$$

(e) forming an apparent acceleration prediction model

$$f_0(\vec{v}_w^s, \vec{X}),$$

as shown in the following formula, where $\vec{X}$ is a rocket body height, the speed vector, the rocket body attitude angle, a rocket body estimated mass and the attitude control instruction acquired by a navigation module and an attitude control module:

$$\hat{y} = f_0(\vec{v}_w^s, \vec{X}) = \begin{bmatrix} \dfrac{T_x + F_x}{m} \\ \dfrac{T_y + F_y}{m} \\ \dfrac{T_z + F_z}{m} \end{bmatrix}$$

Step 2: after the Mach number of the carrier rocket is greater than 0.1, in each wind estimation calculation cycle, acquiring a rocket body apparent acceleration, the speed vector, the rocket body attitude angle, the rocket body estimated mass and the attitude control instruction by the navigation module and the attitude control module.

Step 3: initializing the wind speed vector predicted value $\vec{v}_w^s = [v_{wx}^s, v_{wy}^s, v_{wz}^s]^T$ to a zero vector.

Step 4: using the wind speed vector predicted value, a rocket body measured value (including the rocket body height, the speed vector, and the rocket body attitude angle), and the rocket body estimated mass $m$ and the attitude control instruction, obtaining a rocket body apparent acceleration predicted value $\hat{y}$ from the rocket body prediction model

$$f_0(\vec{v}_w^s, \vec{X}).$$

Specifically, the rocket body estimated mass is estimated as shown is the following formula:

$$\dot{m} = f_7\left(K_p\right)$$

$$\Delta m_{xh} = \Delta m_{xh} + \dot{m} \cdot \Delta T_{ctl}$$

$$m = m_0 - \Delta m_{xh}$$

where $\dot{m}$ is a theoretical value of a rocket body mass flow, which value is related to the thrust adjustment coefficient $K_p$; $m_0$ is a rocket body initial mass before ignition; $\Delta m_{xh}$ is a theoretical estimated value of a consumed fuel mass of the carrier rocket with an initial value of 0; and $\Delta T_{ctl}$ is a control calculation cycle.

Step 5: acquiring a rocket body apparent acceleration measured value by the navigation module.

Step 6: calculating an error $\Delta_y$ between the rocket body apparent acceleration predicted value

$$\hat{y}(\vec{v}_w^s, \vec{X})$$

and measured value $\bar{y}$.

Step 7: updating the wind speed vector predicted value $v_w^s(t)$ by using a matrix $T$ and $\Delta y$, where $\vec{v}_{w0}^s$ is the previous wind speed vector predicted value, and

$$\vec{v}_w^s = \vec{v}_{w0}^s + T\Delta y.$$

A numerical method is used to calculate the transfer matrix, which is shown as follows:

$$T = \frac{\partial \hat{y}}{\partial \vec{v}_w^s} = \begin{bmatrix} \dfrac{f_0(\vec{v}_w^s + [dV,0,0]^T, \vec{X}) - f_0(\vec{v}_w^s, \vec{X})}{dV} \\ \dfrac{f_0(\vec{v}_w^s + [0,dV,0]^T, \vec{X}) - f_0(\vec{v}_w^s, \vec{X})}{dV} \\ \dfrac{f_0(\vec{v}_w^s + [0,0,dV]^T, \vec{X}) - f_0(\vec{v}_w^s, \vec{X})}{dV} \end{bmatrix}$$

Step 8: acquiring the number of iterations, and determining whether the number of iterations is less than 10d.
Step 9: when the number of iterations is less than 10, using the updated wind speed vector predicted value as the next wind speed predicted value, and returning to step 3.
Step 10: when the number of iterations is greater than 10, using the updated wind speed vector predicted value as a final wind speed vector predicted value.

In the wind estimation method for a carrier rocket in Embodiment 1 of the present invention, first, a rocket body apparent acceleration predicted value is determined based on a wind speed vector predicted value, an error between the rocket body apparent acceleration predicted value and a rocket body apparent acceleration measured value is calculated, the wind speed vector predicted value is updated by using the error and a transfer matrix, and a wind speed vector estimated value is obtained after several iterations. The method does not rely on airflow measurement data, but quickly estimates the wind speed vector.

Embodiment 2

Corresponding to Embodiment 1 of the present invention, Embodiment 2 of the present invention provides a wind estimation apparatus for a carrier rocket. Fig. 3 is a structural diagram of the wind estimation apparatus for a carrier rocket in Embodiment 2 of the present invention. As shown in Fig. 3, the wind estimation apparatus for a carrier rocket of Embodiment 2 of the present invention includes a wind speed vector predicted value acquisition module 20, a rocket body apparent acceleration predicted value determination module 22, an error calculation module 24, a wind speed vector predicted value update module 26, and an iteration module 28.
Specifically, the wind speed vector predicted value acquisition module 20 is configured to acquire a wind speed vector predicted value;

the rocket body apparent acceleration predicted value determination module 22 is configured to acquire rocket body state parameters, and input the rocket body state parameters and the wind speed vector predicted value into a preset apparent acceleration prediction model to obtain a rocket body apparent acceleration predicted value, wherein the rocket body state parameters include a rocket body measured value, a rocket body estimated mass and an attitude control instruction;
the error calculation module 24 is configured to acquire a rocket body apparent acceleration measured value, and calculate an error between the rocket body apparent acceleration predicted value and the rocket body apparent acceleration measured value;
the wind speed vector predicted value update module 26 is configured to calculate an updated wind speed vector predicted value by using a preset transfer matrix and the error between the rocket body apparent acceleration predicted value and the rocket body apparent acceleration measured value; and

an iteration module 28 is configured to determine whether the updated wind speed vector predicted value converges to a preset range; when the updated wind speed vector predicted value converges to the preset range, use the updated wind speed vector predicted value as a final wind speed vector predicted value; and when the updated wind speed vector predicted value does not converge to the preset range, use the updated wind speed vector predicted value as the next wind speed vector predicted value and return to the step of acquiring a wind speed vector predicted value.

Specific details of the above-mentioned wind estimation apparatus for a carrier rocket may be understood by correspondingly referring to the corresponding related description and effects in the embodiments shown in Figs. 1 to 2, which will not be repeated here.

Embodiment 3

Embodiments of the present invention also provide an electronic device, which may include a processor and a memory, wherein the processor and the memory may be connected via a bus or by other means.

The processor may be a central processing unit (CPU). The processor may also be other general-purpose processor, a digital signal processor (DSP), an application specific integrated circuit (ASIC), a field-programmable gate array (FPGA), or other programmable logic device, a discrete gate or transistor logic device, a discrete hardware component or other chip, or a combination of the above-mentioned various types of chips.

The memory, as a non-transitory computer-readable storage medium, may be used to store non-transitory software programs, non-transitory computer executable programs and modules, such as program instructions/modules corresponding to the wind estimation method for a carrier rocket in embodiments of the present invention (such as the wind speed vector predicted value acquisition module 20, the rocket body apparent acceleration predicted value determination module 22, the error calculation module 24, the wind speed vector predicted value update module 26 and the iteration module 28 shown in Fig. 3). The processor runs the non-transitory software programs, instructions and modules stored in the memory to execute various function applications of the processor and data processing, i.e., implementing the wind estimation method for a carrier rocket in the above method embodiment.

The memory may include a program storage area and a data storage area, wherein the program storage area may store an operating system and an application program required for at least one function; and the data storage area may store data created by the processor, and the like. In addition, the memory may include a high-speed random access memory, and may also include a non-transitory memory, such as at least one magnetic disk storage device, flash memory device, or other non-transitory solid-state storage device. In some embodiments, the memory may optionally include memories remotely provided from the processor, and these remote memories may be connected to the processor through a network. Examples of the network described above include, but are not limited to, the Internet, an intranet, a local area network, a mobile communication network and combinations thereof.

The one or more modules are stored in the memory, and when executed by the processor, execute the wind estimation method for a carrier rocket in the embodiments as shown in Figs. 1-2.

Specific details of the above-mentioned electronic device may be understood by correspondingly referring to the corresponding related description and effects in the embodiments shown in Figs. 1 to 3, which will not be repeated here.

Those skilled in the art can understand that all or part of the processes in the methods in the above embodiments may be implemented by relevant hardware instructed by a computer program, and the program may be stored in a computer-readable storage medium. The program, when executed, may include the processes of the above method embodiments. The storage medium may be a magnetic disk, an optical disk, a read-only memory (ROM), a random access memory (RAM), a flash memory, a hard disk drive (HDD), a solid-state drive (SSD) , or the like; and the storage medium may also include a combination of the aforementioned types of storage.

Although the embodiments of the present invention are described with reference to the accompanying drawings, those skilled in the art can make various modifications and variations as long as such modifications and variations fall within the scope of the appended claims.

**Claims**

**1.** A wind estimation method for a carrier rocket, comprising:

acquiring a wind speed vector predicted value;
acquiring rocket body state parameters, and inputting the rocket body state parameters and the wind speed vector predicted value into a preset apparent acceleration prediction model to obtain a rocket body apparent acceleration predicted value, wherein the rocket body state parameters comprise a rocket body measured value, a rocket body estimated mass and an attitude control instruction;

acquiring a rocket body apparent acceleration measured value, and calculating an error between the rocket body apparent acceleration predicted value and the rocket body apparent acceleration measured value;

calculating an updated wind speed vector predicted value by using a preset transfer matrix and the error between the rocket body apparent acceleration predicted value and the rocket body apparent acceleration measured value; and

when the updated wind speed vector predicted value converges to a preset range, using the updated wind speed vector predicted value as a final wind speed vector predicted value, wherein

the transfer matrix is obtained by the following method:

acquiring the rocket body apparent acceleration predicted value and the wind speed vector predicted value, respectively; and

calculating a ratio of a derivative of the rocket body apparent acceleration predicted value to a derivative of the wind speed vector predicted value to obtain the transition matrix; and

the apparent acceleration prediction model is built by a method comprising:

acquiring an angle of attack, an angle of sideslip and a Mach number, respectively, and fitting an aerodynamic coefficient as a function related to the Mach number, the angle of attack and the angle of sideslip;

acquiring a rocket body characteristic area and a dynamic pressure, respectively, and calculating an aerodynamic force by using the aerodynamic coefficient, the dynamic pressure and the rocket body characteristic area;

acquiring a static pressure, the attitude control instruction and a thrust adjustment coefficient, respectively, and calculating an engine thrust according to the static pressure, the attitude control instruction and the thrust adjustment coefficient;

calculating the rocket body estimated mass by using the thrust adjustment coefficient; and

obtaining the rocket body apparent acceleration prediction model according to the rocket body estimated mass, the aerodynamic force and the engine thrust.

2. The method according to claim 1, further comprising: when the updated wind speed vector predicted value does not converge to the preset range, using the updated wind speed vector predicted value as the next wind speed vector predicted value and returning to the step of acquiring a wind speed vector predicted value.

3. The method according to claim 1, wherein the angle of attack and the angle of sideslip are determined by a method comprising:

acquiring the wind speed vector predicted value, a rocket body speed vector and an attitude angle; and

calculating the angle of attack and the angle of sideslip according to the wind speed vector predicted value, the rocket body speed vector and the attitude angle.

4. The method according to claim 1, wherein the dynamic pressure is determined by a method comprising:
acquiring an atmospheric density, and calculating the dynamic pressure by using the atmospheric density.

5. The method according to claim 1, wherein before acquiring the wind speed vector predicted value, the method further comprises:
initializing the wind speed vector predicted value to a zero vector.

6. A wind estimation apparatus for a carrier rocket, comprising:

a wind speed vector predicted value acquisition module configured to acquire a wind speed vector predicted value;

a rocket body apparent acceleration predicted value determination module configured to acquire rocket body state parameters, and input the rocket body state parameters and the wind speed vector predicted value into a preset apparent acceleration prediction model to obtain a rocket body apparent acceleration predicted value, wherein the rocket body state parameters comprise a rocket body measured value, a rocket body estimated mass and an attitude control instruction;

an error calculation module configured to acquire a rocket body apparent acceleration measured value, and calculate an error between the rocket body apparent acceleration predicted value and the rocket body apparent acceleration measured value;

a wind speed vector predicted value update module configured to calculate an updated wind speed vector predicted value by using a preset transfer matrix and the error between the rocket body apparent acceleration predicted value and the rocket body apparent acceleration measured value; and

an iteration module configured to, when the updated wind speed vector predicted value converges to a preset range, use the updated wind speed vector predicted value as a final wind speed vector predicted value, wherein the transfer matrix is obtained by the following method:

acquiring the rocket body apparent acceleration predicted value and the wind speed vector predicted value, respectively; and

calculating a ratio of a derivative of the rocket body apparent acceleration predicted value to a derivative of the wind speed vector predicted value to obtain the transition matrix; and

the apparent acceleration prediction model is built by a method comprising:

acquiring an angle of attack, an angle of sideslip and a Mach number, respectively, and fitting an aerodynamic coefficient as a function related to the Mach number, the angle of attack and the angle of sideslip;

acquiring a rocket body characteristic area and a dynamic pressure, respectively, and calculating an aerodynamic force by using the aerodynamic coefficient, the dynamic pressure and the rocket body characteristic area;

acquiring a static pressure, the attitude control instruction and a thrust adjustment coefficient, respectively, and calculating an engine thrust according to the static pressure, the attitude control instruction and the thrust adjustment coefficient;

calculating the rocket body estimated mass by using the thrust adjustment coefficient; and

obtaining the rocket body apparent acceleration prediction model according to the rocket body estimated mass, the aerodynamic force and the engine thrust.

7. An electronic device, comprising:
a memory and a processor communicatively connected to each other, wherein the memory stores computer instructions, which are executed by the processor to execute the wind estimation method for a carrier rocket according to any one of claims 1-5.

8. A computer-readable storage medium, which stores computer instructions configured to cause a computer to execute the wind estimation method for a carrier rocket according to any one of claims 1-5.

**Patentansprüche**

1. Ein Windschätzverfahren für eine Trägerrakete, umfassend:

Erfassen von einem Windgeschwindigkeitsvektor-Vorhersagewert;

Erfassen von Raketenkörper-Zustandsparametern und Eingeben der Raketenkörper-Zustandsparameter und des Windgeschwindigkeitsvektor-Vorhersagewertes in ein voreingestelltes Scheinbeschleunigungs-Vorhersagemodell, um einen Raketenkörper-Scheinbeschleunigungs-Vorhersagewert zu erhalten, wobei die Raketenkörper-Zustandsparameter einen Raketenkörper-Messwert, eine geschätzte Raketenkörper-Masse und eine Lageregelungsanweisung umfassen;

Erfassen von einem Raketenkörper-Scheinbeschleunigungs-Messwert und Berechnen von einem Fehler zwischen dem Raketenkörper-Scheinbeschleunigungs-Vorhersagewert und dem Raketenkörper-Scheinbeschleunigungs-Messwert;

Berechnen von einem aktualisierten Windgeschwindigkeitsvektor-Vorhersagewert unter Verwendung einer voreingestellten Übertragungsmatrix und dem Fehler zwischen dem Raketenkörper-Scheinbeschleunigungs-Vorhersagewert und dem Raketenkörper-Scheinbeschleunigungs-Messwert; und

wenn der aktualisierte Windgeschwindigkeitsvektor-Vorhersagewert gegen einen vorgegebenen Bereich konvergiert, Verwenden von dem aktualisierten Windgeschwindigkeitsvektor-Vorhersagewert als endgültiger Windgeschwindigkeitsvektor-Vorhersagewert, wobei die Übertragungsmatrix durch die folgende Methode erhalten wird:

Erfassen des Raketenkörper-Scheinbeschleunigungs-Vorhersagewertes und entsprechend des Windgeschwindigkeitsvektor-Vorhersagewertes; und

Berechnen von einem Verhältnis einer Ableitung von dem Raketenkörper-Scheinbeschleunigungs-Vorhersagewert zu einer Ableitung von dem Windgeschwindigkeitsvektor-Vorhersagewert, um die Übergangsmatrix zu erhalten; und

das Scheinbeschleunigungs-Vorhersagemodell durch ein Verfahren gebildet wird, umfassend:

Erfassen eines Anstellwinkels, eines Schiebewinkels und entsprechend einer Machzahl und Anpassen eines aerodynamischen Koeffizienten als eine Funktion, die mit der Machzahl, dem Anstellwinkel und dem Schiebewinkel zusammenhängt;

Erfassen einer Raketenkörper-Kennfläche und entsprechend eines dynamischen Drucks, und Berechnen einer aerodynamischen Kraft durch Verwenden des aerodynamischen Koeffizienten, des dynamischen Drucks und der Raketenkörper-Kennfläche;

Erfassen eines statischen Drucks, des Lageregelungsbefehls und entsprechend eines Schubanpassungskoeffizienten und Berechnen eines Triebwerksschubs gemäß dem statischen Druck, dem Lageregelungsbefehl und dem Schubanpassungskoeffizienten;

Berechnen der geschätzten Raketenkörper-Masse unter Verwendung des Schubanpassungskoeffizienten; und

Erhalten des Raketenkörper-Scheinbeschleunigungs-Vorhersagemodells entsprechend der geschätzten Raketenkörper-Masse, der aerodynamischen Kraft und des Triebwerksschubs.

2.  Das Verfahren gemäß Anspruch 1, weiterhin umfassend: wenn der aktualisierte Windgeschwindigkeitsvektor-Vorhersagewert nicht gegen den vorgegebenen Bereich konvergiert, Verwenden des aktualisierten Windgeschwindigkeitsvektor-Vorhersagewertes als nächsten Windgeschwindigkeitsvektor-Vorhersagewert und Wiederaufnahme des Schrittes zum Erfassen eines Windgeschwindigkeitsvektor-Vorhersagewertes.

3.  Das Verfahren gemäß Anspruch 1, wobei der Anstellwinkel und der Schiebewinkel durch ein Verfahren bestimmt werden, umfassend:

Erfassen des Windgeschwindigkeitsvektor-Vorhersagewertes, eines Raketenkörper-Geschwindigkeitsvektors und eines Lagewinkels; und

Berechnen des Anstellwinkels und des Schiebewinkels gemäß dem Windgeschwindigkeitsvektor-Vorhersagewert, dem Raketenkörper-Geschwindigkeitsvektor und dem Lagewinkel.

4.  Das Verfahren gemäß Anspruch 1, wobei der dynamische Druck durch ein Verfahren bestimmt wird, umfassend: Erfassen einer atmosphärischen Dichte, und Berechnen des dynamischen Drucks unter Verwendung der atmosphärischen Dichte.

5.  Das Verfahren gemäß Anspruch 1, wobei vor dem Erfassen des Windgeschwindigkeitsvektor-Vorhersagewertes das Verfahren weiterhin umfasst:
Initialisieren des Windgeschwindigkeitsvektor-Vorhersagewertes auf einen Nullvektor.

6.  Eine Windschätzvorrichtung für eine Trägerrakete, umfassend:

ein Windgeschwindigkeitsvektor-Vorhersagewert-Erfassungsmodul, das zum Erfassen eines Windgeschwindigkeitsvektor-Vorhersagewertes eingerichtet ist;

ein Raketenkörper-Scheinbeschleunigungs-Vorhersagewert-Bestimmungsmodul, das zum Erfassen von Raketenkörper-Zustandsparametern und zum Eingeben der Raketenkörper-Zustandsparameter und des Windgeschwindigkeitsvektor-Vorhersagewertes in ein voreingestelltes Scheinbeschleunigungs-Vorhersagemodell eingerichtet ist, um einen Raketenkörper-Scheinbeschleunigungs-Vorhersagewert zu erhalten, wobei die Raketenkörper-Zustandsparameter einen Raketenkörper-Messwert, eine geschätzte Raketenkörper-Masse und eine Lageregelungsanweisung umfassen;

ein Fehlerberechnungsmodul, das zum Erfassen eines Raketenkörper-Scheinbeschleunigungs-Messwertes und zum Berechnen eines Fehlers zwischen dem Raketenkörper-Scheinbeschleunigungs-Vorhersagewert und dem Raketenkörper-Scheinbeschleunigungs-Messwert eingerichtet ist;

ein Windgeschwindigkeitsvektor-Vorhersagewert-Aktualisierungsmodul, das zum Berechnen eines aktualisierten Windgeschwindigkeitsvektor-Vorhersagewertes unter Verwendung einer voreingestellten Übertragungsmatrix und des Fehlers zwischen dem Raketenkörper-Scheinbeschleunigungs-Vorhersagewert und dem Raketenkörper-Scheinbeschleunigungs-Messwert eingerichtet ist; und

ein Iterationsmodul, das zum Verwenden des aktualisierten Windgeschwindigkeitsvektor-Vorhersagewertes als endgültigen Windgeschwindigkeitsvektor-Vorhersagewert eingerichtet ist, wenn der aktualisierte Windgeschwindigkeitsvektor-Vorhersagewert gegen einen vorgegebenen Bereich konvergiert, wobei

die Übertragungsmatrix nach folgendem Verfahren erhalten wird:

Erfassen des Raketenkörper-Scheinbeschleunigungs-Vorhersagewertes und entsprechend des Windgeschwindigkeitsvektor-Vorhersagewertes; und

Berechnen von einem Verhältnis einer Ableitung des Raketenkörper-Scheinbeschleunigungs-Vorhersagewertes zu einer Ableitung des Windgeschwindigkeitsvektor-Vorhersagewertes, um die Übergangsmatrix zu erhalten; und

das Scheinbeschleunigungs-Vorhersagemodell durch ein Verfahren erstellt wird, umfassend:

Erfassen eines Anstellwinkels, eines Schiebewinkels und entsprechend einer Machzahl und Anpassen eines aerodynamischen Koeffizienten als eine Funktion, die mit der Machzahl, dem Anstellwinkel und dem Schiebewinkel zusammenhängt;

Erfassen einer Raketenkörper-Kennfläche und entsprechend eines dynamischen Drucks und Berechnen einer aerodynamischen Kraft unter Verwendung des aerodynamischen Koeffizienten, des dynamischen Drucks und der Raketenkörper-Kennfläche;

Erfassen eines statischen Drucks, des Lageregelungsbefehls bzw. eines Schubeinstellungskoeffizienten und Berechnen eines Triebwerksschubs gemäß dem statischen Druck, dem Lageregelungsbefehl und dem Schubeinstellungskoeffizienten; Berechnen der geschätzten Raketenkörper-Masse unter Verwendung des Schubeinstellungskoeffizienten; und

Erhalten des Raketenkörper-Scheinbeschleunigungs-Vorhersagemodells entsprechend der geschätzten Raketenkörper-Masse, der aerodynamischen Kraft und des Triebwerksschubs.

7. Ein elektronisches Gerät, umfassend:

einen Speicher und einen Prozessor, die kommunikativ miteinander verbunden sind, wobei der Speicher Computerbefehle speichert, die von dem Prozessor ausgeführt werden, um das Windschätzverfahren für eine Trägerrakete gemäß einem der Ansprüche 1-5 auszuführen.

8. Ein computerlesbares Speichermedium, das Computerbefehle speichert, die dazu eingerichtet sind, einen Computer zu veranlassen, das Windschätzverfahren für eine Trägerrakete gemäß einem der Ansprüche 1-5 auszuführen.

**Revendications**

1. Procédé d'estimation du vent pour une fusée porteuse, comprenant :

acquérir une valeur prédite de vecteur de vitesse du vent ;

acquérir des paramètres d'état de corps de fusée, et entrer les paramètres d'état de corps de fusée et la valeur prédite de vecteur de vitesse du vent dans un modèle prédictif d'accélération apparente prédéfini pour obtenir une valeur prédite d'accélération apparente de corps de fusée, dans lequel les paramètres d'état de corps de fusée comprennent une valeur mesurée de corps de fusée, une masse estimée de corps de fusée et une instruction de commande d'attitude ;

acquérir une valeur mesurée d'accélération apparente de corps de fusée, et calculer une erreur entre la valeur prédite d'accélération apparente de corps de fusée et la valeur mesurée d'accélération apparente de corps de fusée ;

calculer une valeur prédite de vecteur de vitesse du vent mise à jour en utilisant une matrice de transfert prédéfinie et l'erreur entre la valeur prédite d'accélération apparente de corps de fusée et la valeur mesurée d'accélération apparente de corps de fusée ; et

lorsque la valeur prédite de vecteur de vitesse du vent mise à jour converge vers une plage prédéfinie, utiliser la valeur prédite de vecteur de vitesse du vent mise à jour comme une valeur prédite de vecteur de vitesse du vent finale, dans lequel la matrice de transfert est obtenue par le procédé suivant :

acquérir la valeur prédite d'accélération apparente de corps de fusée et la valeur prédite de vecteur de vitesse du vent, respectivement ; et

calculer un rapport d'un dérivé de la valeur prédite d'accélération apparente de corps de fusée sur un dérivé de la valeur prédite de vecteur de vitesse du vent pour obtenir la matrice de transition ; et le modèle prédictif d'accélération apparente est construit par un procédé comprenant :

acquérir un angle d'attaque, un angle de dérapage et un nombre de Mach, respectivement, et ajuster un coefficient aérodynamique en tant que fonction liée au nombre de Mach, à l'angle d'attaque et l'angle de dérapage ;

acquérir une aire caractéristique de corps de fusée et une pression dynamique, respectivement, et calculer une force aérodynamique en utilisant le coefficient aérodynamique, la pression dynamique et l'aire caractéristique de corps de fusée ;

acquérir une pression statique, l'instruction de commande d'attitude et un coefficient d'ajustement de poussée, respectivement, et calculer une poussée du réacteur en fonction de la pression statique, l'instruction de commande d'attitude et du coefficient d'ajustement de poussée ;

calculer la masse estimée de corps de fusée en utilisant le coefficient d'ajustement de poussée ; et obtenir le modèle prédictif d'accélération apparente de corps de fusée en fonction de la masse estimée de corps de fusée, la force aérodynamique et la poussée du réacteur.

2. Procédé selon la revendication 1, comprenant en outre : lorsque la valeur prédite de vecteur de vitesse du vent mise à jour ne converge pas vers la plage prédéfinie, utiliser la valeur prédite de vecteur de vitesse du vent mise à jour comme la prochaine valeur prédite de vecteur de vitesse du vent et retourner à l'étape d'acquisition d'une valeur prédite de vecteur de vitesse du vent.

3. Procédé selon la revendication 1, dans lequel l'angle d'attaque et l'angle de dérapage sont déterminés par un procédé comprenant :

acquérir la valeur prédite de vecteur de vitesse du vent, un vecteur de vitesse du corps de fusée et un angle d'attitude ; et

calculer l'angle d'attaque et l'angle de dérapage en fonction de la valeur prédite de vecteur de vitesse du vent, du vecteur de vitesse du corps de fusée et de l'angle d'attitude.

4. Procédé selon la revendication 1, dans lequel la pression dynamique est déterminée par un procédé comprenant : acquérir une densité atmosphérique, et calculer la pression dynamique en utilisant la densité atmosphérique.

5. Procédé selon la revendication 1, dans lequel avant d'acquérir la valeur prédite de vecteur de vitesse du vent, le procédé comprend en outre :
initialiser la valeur prédite de vecteur de vitesse du vent à un vecteur nul.

6. Appareil d'estimation du vent pour une fusée porteuse, comprenant :

un module d'acquisition de valeur prédite de vecteur de vitesse du vent configuré pour acquérir une valeur prédite de vecteur de vitesse du vent ;

un module de détermination de valeur prédite d'accélération apparente de corps de fusée configuré pour acquérir des paramètres d'état de corps de fusée, et entrer les paramètres d'état de corps de fusée et la valeur prédite de vecteur de vitesse du vent dans un modèle prédictif d'accélération apparente prédéfini pour obtenir une valeur prédite d'accélération apparente de corps de fusée, dans lequel les paramètres d'état de corps de fusée comprennent une valeur mesurée de corps de fusée, une masse estimée de corps de fusée et une instruction de commande d'attitude ;

un module de calcul d'erreur configuré pour acquérir une valeur mesurée d'accélération apparente de corps de fusée, et calculer une erreur entre la valeur prédite d'accélération apparente de corps de fusée et la valeur mesurée d'accélération apparente de corps de fusée ;

un module de mise à jour de valeur prédite de vecteur de vitesse du vent configuré pour calculer une valeur prédite de vecteur de vitesse du vent mise à jour en utilisant une matrice de transfert prédéfinie et l'erreur entre la valeur prédite d'accélération apparente de corps de fusée et la valeur mesurée d'accélération apparente de corps de fusée ; et

un module d'itération configuré pour, lorsque la valeur prédite de vecteur de vitesse du vent mise à jour converge vers une plage prédéfinie, utiliser la valeur prédite de vecteur de vitesse du vent mise à jour comme une valeur prédite de vecteur de vitesse du vent finale, dans lequel

la matrice de transfert est obtenue par le procédé suivant :

acquérir la valeur prédite d'accélération apparente de corps de fusée et la valeur prédite de vecteur de vitesse du vent, respectivement ; et

calculer un rapport d'un dérivé de la valeur prédite d'accélération apparente de corps de fusée sur un dérivé de la valeur prédite de vecteur de vitesse du vent pour obtenir la matrice de transition ; et

le modèle prédictif d'accélération apparente est construit par un procédé comprenant :

acquérir un angle d'attaque, un angle de dérapage et un nombre de Mach, respectivement, et ajuster un coefficient aérodynamique en tant que fonction liée au nombre de Mach, à l'angle d'attaque et l'angle de dérapage ;

acquérir une aire caractéristique de corps de fusée et une pression dynamique, respectivement, et calculer une force aérodynamique en utilisant le coefficient aérodynamique, la pression dynamique et l'aire caractéristique de corps de fusée ;

acquérir une pression statique, l'instruction de commande d'attitude et un coefficient d'ajustement de poussée, respectivement, et calculer une poussée du réacteur en fonction de la pression statique, l'instruction de commande d'attitude et du coefficient d'ajustement de poussée ;

calculer la masse estimée de corps de fusée en utilisant le coefficient d'ajustement de poussée ; et

obtenir le modèle prédictif d'accélération apparente de corps de fusée en fonction de la masse estimée de corps de fusée, la force aérodynamique et la poussée du réacteur.

7. Dispositif électronique, comprenant :
une mémoire et un processeur connectés de manière communicative l'un à l'autre, dans lequel la mémoire stocke des instructions informatiques, qui sont exécutées par le processeur pour exécuter le procédé d'estimation du vent pour une fusée porteuse selon l'une quelconque des revendications 1 à 5.

8. Support de stockage lisible par ordinateur, qui stocke des instructions informatiques configurées pour amener un ordinateur à exécuter le procédé d'estimation du vent pour une fusée porteuse selon l'une quelconque des revendications 1 à 5.

Acquiring a wind speed vector predicted value — S101

Acquiring rocket body state parameters, and inputting the rocket body state parameters and the wind speed vector predicted value into a preset apparent acceleration prediction model to obtain a rocket body apparent acceleration predicted value, wherein the rocket body state parameters comprise a rocket body measured value, a rocket body estimated mass and an attitude control instruction — S102

Acquiring a rocket body apparent acceleration measured value, and calculating an error between the rocket body apparent acceleration predicted value and the rocket body apparent acceleration measured value — S103

Calculating an updated wind speed vector predicted value by using a preset transfer matrix and the error between the rocket body apparent acceleration predicted value and the rocket body apparent acceleration measured value — S104

When the updated wind speed vector predicted value does not converge to the preset range, using the updated wind speed vector predicted value as the next wind speed vector predicted value — S106

When the updated wind speed vector predicted value converges to the preset range, using the updated wind speed vector predicted value as a final wind speed vector predicted value — S105

Fig. 1

Step 2

Acquiring a rocket body measured value, a rocket body estimated mass and an attitude control instruction

Step 3

Acquiring a wind speed vector predicted value

Step 5

Acquiring a rocket body apparent acceleration measured value by a navigation module

Step 4

Acquiring a rocket body apparent acceleration predicted value from initial conditions of a rocket body dynamics model

Step 6

Acquiring a rocket body apparent and calculating an error between the rocket body apparent acceleration predicted value and the rocket body apparent acceleration measured value

Step 7

Calculating an updated wind speed vector predicted value by using a preset transfer matrix and the error between the rocket body apparent acceleration predicted value and the rocket body apparent acceleration measured value

Step 9

Using the updated wind speed vector predicted value as the next wind speed predicted value

Yes

Step 8

Number of iterations<10

No

Step 10

Using the updated wind speed vector predicted value as a final wind speed vector predicted value

Fig. 2

| Wind speed vector predicted value acquisition module 20 | Rocket body apparent acceleration predicted value determination module 22 | Error calculation module 24 | Wind speed vector predicted value update module 26 | Iteration module 28 |

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6807468 B2
- CN 111122899 B

- JP 2013107584 A